(19) Europäisches Patentamt

European Patent Office

Office européen des brevets

(11) EP 0 825 238 A2

(12) **EUROPÄISCHE PATENTANMELDUNG**

(43) Veröffentlichungstag:
25.02.1998 Patentblatt 1998/09

(51) Int. Cl.⁶: **C09D 133/04**, C08J 7/04,
B32B 27/00
// (C09D133/04, 133:08)

(21) Anmeldenummer: 97113949.8

(22) Anmeldetag: 13.08.1997

(84) Benannte Vertragsstaaten:
AT BE CH DE DK ES FI FR GB GR IE IT LI LU MC
NL PT SE

(30) Priorität: 17.08.1996 DE 19633181

(71) Anmelder:
BASF Lacke und Farben AG
48165 Münster (DE)

(72) Erfinder:
• Enthoven, Nicolaas Leonardus Marie, Dr.
4003 KW Tiel (NL)
• van Rijn, Peter Eric, Dr.
4007 ZJ Tiel (NL)

(74) Vertreter:
Fitzner, Uwe, Dr. et al
Kaiserswerther Strasse 74
40878 Ratingen (DE)

(54) **Siegellack und damit beschichtete Kunststoffolie**

(57)    Gegenstand der vorliegenden Erfindung ist ein Siegellack auf der Basis einer wäßrigen Acrylatcopolymerisat-Dispersion bzw. -Lösung, welche hergestellt wird durch Polymerisation von Alkylestern der Acrylsäure und der Methacrylsäure und von $\alpha,\beta$-ethylenisch ungesättigten Carbonsäuren, dadurch gekennzeichnet, daß der Siegellack eine Mischung aus

1.) einem weichen Polymer (1) mit einer Glasübergangstemperatur Tg1 unterhalb von Raumtemperatur und

2.) einem harten Polymer (2) mit einer Glasübergangstemperatur Tg2, die höher ist als die Glasübergangstemperatur Tg1 des Polymers (1)

enthält, wobei sowohl das weiche Polymer (1) als auch das harte Polymer (2) weniger als 5 Gew.-%, bezogen auf das Gesamtgewicht an eingesetzten Monomeren, nitrilgruppenhaltige Monomere einpolymerisiert enthalten.

EP 0 825 238 A2

**Beschreibung**

Die vorliegende Erfindung betrifft einen Siegellack auf der Basis einer wäßrigen Acrylatcopolymerisat-Dispersion und/oder -Lösung, welche herstellbar ist durch Polymerisation von Alkylestern der Acrylsäure und der Methacrylsäure und von $\alpha,\beta$-ethylenisch ungesättigten Carbonsäuren.

Die Erfindung betrifft weiterhin ein Verfahren zur Herstellung der Siegellacke, die Verwendung der Siegellacke zur Beschichtung von Kunststoffolien sowie ein Verfahren zur Herstellung von gesiegelten Verpackungsbehältern unter Verwendung der erfindungsgemäßen Siegellacke.

Kunststoffolien, die beispielsweise für Lebensmittelverpackungen eingesetzt werden sollen, werden mit klebenden Beschichtungen versehen, um einen wirksamen Siegelverschluß zu ermöglichen. Die klebenden Beschichtungen sind entweder Heißsiegellacke, die bei erhöhten Temperaturen siegelbar sind, oder Kaltsiegellacke, die bei Temperaturen von etwa 0 bis 40 °C versiegelt werden.

Kaltsiegel-Beschichtungen und deren Eigenschaften sind z.B. beschrieben in L. Placzek in Coating, 18 (4), Seite 94 bis 95, 1985. Kaltsiegel-Lacke werden vorzugsweise aus wäßriger Phase aufgetragen. Es werden vielfach wäßrige Dispersionen eingesetzt, deren Hauptbestandteil ein Naturlatex ist. Derartige Kaltsiegellacke enthalten üblicherweise neben dem Naturlatex Dispersionen plastischer Polymere, Dispersionen von Weichmachern, Alterungsschutzmittel, Stabilisatoren und Antiblock-Additive. Druckempfindliche Klebstoffe, die im Kaltsiegelverfahren eingesetzt werden, werden vor allem bei der Lebensmittelverpackung, z.B. für Schokoladen- und Eisverpackungen, eingesetzt. Die Nachteile der Kaltsiegellacke auf Basis von Naturkautschuk-Latices bestehen insbesondere darin, daß die Beschichtungsmittel keine ausreichende Stabilität besitzen und zum Teil mit physiologisch nicht unbedenklichen Alterungsschutzmitteln und Stabilisatoren ausgestattet werden müssen. Außerdem weisen die Lacke vielfach einen Geruch auf, der zum Teil auf das Füllgut übertragen werden kann.

Kaltsiegellacke zur Versiegelung von Kunststoffolien, wie z.B. Polypropylen-Folien, sind beispielsweise bekannt aus der US-A-5,070,164, der US-A-4,898,787 und der US-A-4,888,395. Die Siegellacke basieren auf Emulsionspolymerisaten, die hergestellt werden durch Emulsionspolymerisation von Monomeren, ausgewählt aus Alkylacrylaten und Vinylidenchlorid, Vinylacetat, Alkylmethacrylaten und Styrol sowie Methacrylsäure, Acrylsäure, Itaconsäure und Maleinsäure. Die Emulsionscopolymerisate haben ein durchschnittliches Molekulargewicht von etwa 20.000 bis 150.000 und eine Glasübergangstemperatur von etwa -15 °C bis etwa +15 °C. Die Copolymerisate werden in einem zweistufigen Emulsionscopolymerisationsverfahren hergestellt.

Die Nachteile der bekannten Kaltsiegellacke auf der Basis wäßriger Polyacrylatdispersionen bestehen darin, daß sie aufgrund ihrer niedrigen Glasübergangstemperatur schlechte Antiblock-Eigenschaften haben, d.h. bei der Lagerung und während des Gebrauchs Zeigen mit Kaltsiegellacken beschichtete Kunststoffolien, wenn sie in Form von Rollen längere Zeit unter normalen Lagerbedingungen gelagert werden, eine Neigung, an den übereinanderliegenden Folienschichten anzuhaften. Ferner erfordern sie unbedingt das Aufbringen einer Release-Coating-Schicht an der anderen Seite des Films.

Heißsiegellacke werden verwendet, weil sie gegenüber anderen Filmen, beispielsweise gegenüber Polyolefinfilmen, nicht blocken.

Nacht beschichtete Kunststoffolien, beipielsweise aus Polypropylen, haben im allgemeinen sehr hohe Wärmeverschweißtemperaturen und einen sehr schmalen Wärmeverschweißbereich. Insbesondere nichtbeschichtetes, orientiertes Polypropylen neigt dazu, sich bei den erforderlichen hohen Verschweißtemperaturen zu entorientieren und zu schrumpfen.

Es ist bekannt, Kunststoffolien mit klebenden Beschichtungen zu versehen, um die Wärmeverschweißeigenschaften zu verbessern.

Beschichtungen aus Heißsiegellacken auf Kunststoffolien werden bei erhöhten Temperaturen, normalerweise oberhalb von 90 °C, versiegelt. Typische Heißsiegellacke sind beispielsweise beschrieben in US-A-3,753,769, US-A-4,565,739, US-A-4,564,559, US-A-4,058,645, DE-A-24 40 112, US-A-4,403,464, US-A-5,017,430 und US-A-4,749,616. In der US-A-3,753,769 sind Terpolymerbeschichtungsmittel auf Acrylatharzbasis beschrieben, die zum Überziehen von Polyolefin-Folien dienen und bei Temperaturen oberhalb von 95 °C gesiegelt werden. Die Beschichtungsmittel enthalten Copolymere oder Interpolymere aus einer $\alpha,\beta$- ethylenisch ungesättigten Carbonsäure, einem Alkylacrylatester und einem Alkylmethacrylatester. Die Glasübergangstemperatur der Harze liegt im Bereich von etwa 38 °C bis 60 °C.

Heißsiegel-Beschichtungen haben in der Regel gute Antiblock-Eigenschaften, d.h. sie haften nicht auf unbeschichteten Kunststoffolien, nachteilig sind jedoch ihre Versiegelungseigenschaften. So sind hohe Versiegelungstemperaturen ungeeignet für Verpackungen, die temperaturempfindliche Güter enthalten. Außerdem ermöglichen niedrigere Siegeltemperaturen höhere Abfülliniengeschwindigkeiten. Man ist daher bestrebt, die Siegeltemperatur von Heißsiegel-Beschichtungsmitteln möglichst niedrig zu halten.

Schließlich sind aus der DE-A-43 41 815 Kaltsiegellacke bekannt, die bei möglichst niedriger Temperatur siegelbar sind und die gute Anti-Blocking-Eigenschaften aufweisen. Diese Siegellacke basieren auf einer wäßrigen Acrylatcopolymerisat-Dispersion bzw. -Lösung. Die Verwendung einer Mischung eines weichen und eines harten Polymers in den Siegellacken ist in dieser Schrift jedoch nicht beschrieben.

Die der vorliegenden Erfindung zugrundeliegende Aufgabe bestand daher darin, Siegellacke zur Verfügung zu stellen, die bei noch niedrigeren Temperaturen siegelbar sind und dabei aber gleichzeitig gute Anti-Blocking-Eigenschaften aufweisen. Die Siegelungseigenschaften sollten selbstverständlich ausgezeichnet sein, d.h. die Verpackungsbehälter sollten eine ausreichende Siegelnahtfestigkeit aufweisen. Des weiteren sollten die verwendeten Siegellacke geruchsstabil sein und lebensmittelrechtlichen Vorschriften entsprechen. Außerdem sollten die überzogenen Kunststoffolien ausgezeichnete Gleiteigenschaften über einen weiten Temperaturbereich und ausgezeichnete optische Eigenschaften, wie z.B. Glanz, aufweisen.

Die der vorliegenden Erfindung zugrundeliegende Aufgabe wird überraschenderweise durch einen Siegellack der eingangs genannten Art gelöst, der dadurch gekennzeichnet ist, daß er eine Mischung aus

1.) einem weichen Polymer (1) mit einer Glasübergangstemperatur Tg1 unterhalb von Raumtemperatur und

2.) einem harten Polymer (2) mit einer Glasübergangstemperatur Tg2, die höher ist als die Glasübergangstemperatur Tg1 des Polymers (1)

enthält, wobei sowohl das weiche Polymer (1) als auch das harte Polymer (2) weniger als 5 Gew.-%, bezogen auf das Gesamtgewicht an eingesetzten Monomeren, nitrilgruppenhaltige Monomere einpolymerisiert enthalten.

Die Erfindung betrifft weiterhin ein Verfahren zur Herstellung der Siegellacke, die Verwendung der Siegellacke zur Beschichtung von Kunststoffolien sowie ein Verfahren zur Herstellung von gesiegelten Verpackungsbehältern unter Verwendung der erfindungsgemäßen Siegellacke.

Die unter Verwendung des erfindungsgemäßen Siegellackes hergestellten gesiegelten Verpackungsbehälter weisen ausgezeichnete Siegelnahtfestigkeiten und ausgezeichnete optische Eigenschaften auf. Die beschichteten Kunststoffolien haben ausgezeichnete Anti-Blocking-Eigenschaften, d.h. sie verkleben nicht bei Kontakt mit unbeschichteten Kunststoffolien. Außerdem ist es besonders vorteilhaft, daß bei relativ niedrigen Temperaturen gesiegelt werden kann. Die Siegeltemperatur liegt im allgemeinen 20 bis 30 °C niedriger als die Siegeltemperatur bei Verwendung herkömmlicher Heißsiegellacke. Hierdurch kann bei gleicher Siegeltemperatur die Liniengeschwindigkeit erhöht werden. Vorteilhaft ist ferner, daß die bei Verwendung der üblichen Kaltsiegellacke erforderliche, sogenannte "Release-Coating"-Beschichtung an der anderen Seite des Filmes bei der Verwendung der erfindungsgemäßen Siegellacke nicht unbedingt erforderlich ist. Werden in den Siegellacken Polymere eingesetzt, die keine nitrilgruppenhaltigen Monomere enthalten, ist außerdem bei der Herstellung der Polymere der mit der Verwendung von Acrylnitril o.ä. als Comonomer verbundene Sicherheitsaufwand vermeidbar.

Im folgenden werden nun zunächst die einzelnen Bestandteile des erfindungsgemäßen Siegellackes näher erläutert.

Es ist erfindungswesentlich, daß der Siegellack eine Mischung aus

1.) einem weichen Polymer (1) mit einer Glasübergangstemperatur Tg1 unterhalb von Raumtemperatur und

2.) einem harten Polymer (2) mit einer Glasübergangstemperatur Tg2, die höher ist als die Glasübergangstemperatur Tg1 des Polymers (1)

enthält.

Es ist ferner erfindungswesentlich, daß sowohl das weiche Polymer (1) als auch das harte Polymer (2) weniger als 5 Gew.-%, bevorzugt weniger als 1 Gew.-%, besonders bevorzugt weniger als 0,1 Gew.-%, jeweils bezogen auf das Gesamtgewicht der Zur Herstellung des Polymers eingesetzten Monomeren, und ganz besonders bevorzugt gar keine nitrilgruppenhaltige Monomere, insbesondere Acrylnitril und/oder Methacrylnitril, einpolymerisiert enthalten.

Die Glasübergangstemperatur der Polymeren (1) und (2) kann mit Hilfe der DSC (= Differential Scanning Calorimetry) gemessen werden. Die Glasübergangstemperatur kann aber bekanntermaßen auch mit Hilfe der Gleichung

$$1/Tg = \Sigma\, W_n/Tg_n$$

Tg = Glasübergangstemperatur des Copolymers in °K
Wn = Gewichtsanteil des n-ten Monomers
Tgn = Glasübergangstemperatur des Homopolymers aus dem n-ten Monomer

berechnet werden.

Das weiche Polymer (1) weist dabei eine Glasübergangstemperatur Tg1 auf, die unterhalb von Raumtemperatur, bevorzugt zwischen -25 und + 10 °C und ganz besonders bevorzugt zwischen -15 und +5 °C liegt. Das zahlenmittlere Molekulargewicht des weichen Polymers (1) beeinflußt üblicherweise sowohl die Siegeltemperatur des Siegellackes als auch die Siegelnahtfestigkeit. Bevorzugt weist das weiche Polymer (1) ein zahlenmittleres Molekulargewicht von 5.000 bis 50.000, besonders bevorzugt von 10.000 bis 20.000, auf (gemessen mit Gelpermeationschromatographie gegen Polystyrolstandard und gelöst in Tetrahydrofuran). Das weiche Polymer (1) weist bevorzugt eine Säurezahl von 5 bis 15 mgKOH/g auf.

Bevorzugt eingesetzte weiche Polymere (1) sind erhältlich unter Verwendung von

a) 0,1 bis 10 Gew.-%, bevorzugt 0,5 bis 5 Gew,-%, $\alpha,\beta$-ethylenisch ungesättigten Monomeren mit Carbonsäure- und/oder Sulfonsäuregruppen,

b) 75 bis 95 Gew.-%, bevorzugt 85 bis 90 Gew.-%, Alkylestern der Acrylsäure mit 1 - 12 Kohlenstoffatomen im Alkylrest,

c) 5 bis 20 Gew.-%, bevorzugt 9 bis 14 Gew.-%, Alkylestern der Methacrylsäure mit 1 - 12 Kohlenstoffatomen im Alkylrest und

d) ggf. bis zu 25 Gew.-%, bevorzugt bis zu 10 Gew.-%, weiterer Monomerer,

wobei die Summe von a), b), c) und d) jeweils 100 Gew.-% beträgt und die Mengen von a), b), c) und d) so gewählt werden, daß das Polymer (1) den gewünschten Tg1-Wert aufweist.

Als Komponente (a) zur Herstellung des weichen Polymers (1) werden bevorzugt $\alpha,\beta$-ethylenisch ungesättigte Carbonsäuren eingesetzt, es können aber auch andere ethylenisch ungesättigte Monomere mit mindestens einer Carbonsäure- und/oder Sulfonsäuregruppe eingesetzt werden, wie z.B. Sulfoethylmethacrylat. Beispiele für als Monomer (a) eingesetzte $\alpha,\beta$-ethylenisch ungesättigte Carbonsäuren sind Acrylsäure, Methacrylsäure, Maleinsäure, Crotonsäure sowie deren Mischungen. Bevorzugt werden $\alpha,\beta$-monoethylenisch ungesättigte Monocarbonsäuren verwendet. Besonders bevorzugt wird Acrylsäure eingesetzt.

Beispiele für geeignete Alkylester der Acrylsäure mit 1 bis 12 Kohlenstoffatomen im Alkylrest (Komponente (b)) sind Methylacrylat, Ethylacrylat, Propylacrylat, iso-Propylacrylat, Butylacrylat, iso-Butylacrylat, t-Butylacrylat, n-Pentylacrylat, iso-Pentylacrylat, Hexylacrylat, n-Octylacrylat, 2-Ethylhexylacrylat und Decylacrylat. Bevorzugt wird Ethylacrylat eingesetzt.

Beispiele für geeignete Alkylester der Methacrylsäure (Komponente (c)) sind Methylmethacrylat, Ethylmethacrylat, Propylmethacrylat, iso-Propylmethacrylat, n-Butylmethacrylat, iso-Butylmethacrylat, t-Butylmethacrylat, n-Pentylmethacrylat, iso-Pentylmethacrylat, Hexylmethacrylat, n-Octylmethacrylat, 2-Ethylhexylmethacrylat, Decylmethacrylat und Dodecylmethacrylat.

Beispiele für geeignete Monomere (d) sind Vinylaromaten, wie z.B. Styrol, $\alpha$-Alkylstyrol und Vinyltoluol, insbesondere Styrol. Bevorzugt werden die Vinylaromaten in einer Menge von 0 bis 10 Gew.-%, bezogen auf das Gesamtgewicht der Monomerenmischung, eingesetzt.

Ferner können als Komponente (d) auch ein oder mehrere nitrilgruppenhaltige Monomere, wie z.B. Acrylnitril und/oder Methacrylnitril, in einer Menge von weniger als 5 Gew.-%, bevorzugt weniger als 1 Gew.-%, besonders bevorzugt weniger als 0,1 Gew.-%, und ganz besonders bevorzugt 0 Gew.-%, jeweils bezogen auf das Gesamtgewicht der zur Herstellung des Polymers eingesetzten Monomeren, eingesetzt werden.

Das harte Polymer (2) weist eine Glasübergangstemperatur Tg2 auf, die höher ist als die Glasübergangstemperatur Tg1 des Polymers (1) und die bevorzugt mehr als 10 bis 60 °C und ganz besonders bevorzugt 15 bis 35 °C beträgt. Das zahlenmittlere Molekulargewicht des harten Polymers ist kein besonders kritischer Parameter und kann innerhalb weiter Grenzen variieren. Besonders bevorzugt weist das harte Polymer (2) ein zahlenmittleres Molekulargewicht von 5.000 bis 50.000, ganz besonders bevorzugt von 10.000 bis 20.000, auf (gemessen mit Gelpermeationschromatographie gegen Polystyrolstandard und gelöst in Tetrahydrofuran). Das harte Polymer (2) weist bevorzugt eine Säurezahl von 30 bis 50 mgKOH/g auf.

Bevorzugt eingesetzte harte Polymere (2) sind erhältlich unter Verwendung von

a) 1 bis 10 Gew.-%, bevorzugt 4 bis 8 Gew.-%, $\alpha,\beta$-ethylenisch ungesättigten Monomeren mit Carbonsäure- oder Sulfonsäuregruppen,

b) 35 bis 84 Gew.-%, bevorzugt 45 bis 76 Gew.-%, Alkylestern der Acrylsäure mit 1 - 12 Kohlenstoffatomen im Alkylrest,

c) 15 bis 60 Gew.-%, bevorzugt 20 bis 45 Gew.-%, Alkylestern der Methacrylsäure mit 1 - 12 Kohlenstoffatomen im Alkylrest und

d) ggf. bis zu 25 Gew.-%, bevorzugt bis zu 10 Gew.-%, weiterer Monomerer,

wobei die Summe von a), b), c) und d) jeweils 100 Gew.-% beträgt und die Mengen von a), b), c) und d) so gewählt werden, daß das Polymer (2) den gewünschten Tg2-Wert aufweist.

Beispiele für als Komponente (a) bis (d) geeignete Monomere sind bereits bei der Beschreibung des Polymers (1) aufgeführt.

Die Polymere (1) und (2) sind herstellbar mittels Emulsionspolymerisation. Die Emulsionspolymerisation zur Herstellung der Polymere (1) und (2) wird in wäßrigem Medium in bekannten Apparaturen, beispielsweise in einem Rührkessel mit Heiz- und Kühlvorrichtungen, durchgeführt.

Die Zugabe der Monomeren kann in der Weise erfolgen, daß eine Lösung aus dem gesamten Wasser, dem Emulgator und dem Initiatior oder einem Teil des Initiators vorgelegt wird und, falls der Initiator teilweise während der Polymerisation zugegeben wird, getrennt davon, aber parallel dazu, der Rest des Initiators bei der Polymerisationstemperatur langsam zugegeben wird. Es ist auch möglich, einen Teil des Wassers und des Emulgators vorzulegen und aus dem Rest des Wassers und des Emulgators und aus dem Monomerengemisch eine Präemulsion herzustellen, die bei der Polymerisationstemperatur langsam zugegeben wird, wobei der Initiator wiederum getrennt vorgelegt oder teilweise getrennt zugegeben wird. Es ist auch möglich, in der ersten Stufe das Monomerengemisch in Form einer Präemulsion zuzugeben und in der zweiten Stufe das Monomerengemisch in Substanz, d.h. ohne Wasser und Emulgator, zuzugeben und den Initiator getrennt, aber parallel dazu zuzugeben. Bevorzugt ist, eine Lösung aus Wasser und Emulgator vorzulegen und das Monomerengemisch und getrennt davon, aber parallel dazu, den Initiator in Wasser bei der Polymerisationstemperatur langsam zuzugeben. Anschließend wird nach erneuter Emulgatorzugabe in der zweiten Polymerisationsstufe der Rest des Monomerengemisches in den Reaktor dosiert. Der Rest des Initiators, der nicht vorgelegt wurde, kann auch komplett nach Zugabe der Monomeren zugegeben werden. Diese Nachdosierung von Initiator ist jedoch weniger vorteilhaft.

Die Polymerisationstemperatur liegt üblicherweise im Bereich von 40 bis 100 °C, bevorzugt von 70 bis 90 °C.

Das erhaltene Polymer kann in Form einer Latex-Emulsion vorliegen. Alternativ kann aber auch ein Lösungspolymer hergestellt werden, wobei wenigstens ein Teil des Polymers als Lösung vorliegt und 0 bis 99 % des Polymers, bevorzugt 0 bis 60 % des Polymers dispergiert vorliegen. Das Lösungspolymer wird typischerweise durch Zugabe einer ausreichenden Menge einer Base erhalten. In einer bevorzugten Ausführungsform der Erfindung liegt das weiche Polymer (1) im wesentlichen als wäßrige Dispersion und das harte Polymer (2) zumindest teilweise, bevorzugt im wesentlichen als Lösung vor.

Als Emulgatoren können anionische, kationische und/oder nichtionische Emulgatoren verwendet werden, wie z.B. Salze von Alkylcarbonsäuren, Salze der Phosphorsäure, Salze von Alkylsulfaten und Alkylsulfonaten, Alkylaryletheralkohole und Salze von Alkylarylpolyethersulfaten. Beispiele für anionische Emulgatoren sind Alkali- oder Ammoniumsalze von Schwefelsäurehalbestern von Alkylphenolen oder von Alkoholen, ferner die Schwefelsäurehalbester von oxyethylierten Alkylphenolen oder oxyethylierten Alkoholen sowie Phosphorsäureester von oxyalkylierten Alkylphenolen.

Eingesetzt werden beispielsweise Alkalisalze von Schwefelsäurehalbestern von mit 23 Mol Ethylenoxid pro Mol umgesetztem Nonylphenol, Alkyl- oder Arylsulfonat, Natriumlaurylsulfat, Natriumlaurylethoxylatsulfat sowie das Alkalisalz von Diestern der Sulfobernsteinsäure mit Alkoholen mit 6 - 20 Kohlenstoffatomen. Die bevorzugt verwendeten nichtionischen Emulgatoren sind Ether von mit 5 - 23 Mol Ethylenoxid umgesetzten Nonylphenolen.

Bevorzugt werden Phosphorsäureester von oxyalkylierten Alkylphenolen, besonders Phosphorsäureester des Umsetzungsproduktes von 1 mol Nonylphenol mit 5 mol Ethylenoxid mit einer Säurezahl von 125 eingesetzt. Bevorzugt werden ferner Emulgatoren auf Basis Natriumdodecylbenzolsulfonat, wie z.B. das Handelsprodukt Maranil A75 der Firma Henkel, eingesetzt.

Die Emulgatoren werden üblicherweise in einer Menge von 0,1 bis 3 Gew.-%, bezogen auf die Gesamtmenge Monomeren, eingesetzt.

Als Initiatoren für die Emulsionspolymerisation eignen sich die üblichen anorganischen Peroxodisulfate, bevorzugt Kaliumperoxodisulfat und Ammoniumperoxodisulfat, sowie Ammonium- oder Alkalimetallperoxydiphosphate. Es können auch Redox-Initiatoren eingesetzt werden, beispielsweise Wasserstoffperoxid, Benzoylperoxid, organische Perester, wie Perisopivalat, in Kombination mit wasserlöslichen Reduktionsmitteln, wie z. B. Ascorbinsäure, Schwefelverbindungen, Triethylamin, Natriumdisulfit, Hydrazin, Hydroxylamin, Glykolsäure und Weinsäure.

Die Initiatoren werden üblicherweise in einer Menge von 0,1 bis 2 Gew.-%, bezogen auf die Gesamtmenge an Monomeren, eingesetzt.

Geeignete Kettenübertragungsmittel sind beispielsweise Mercaptane oder Polyhalogenverbindungen oder verzweigte aromatische Kohlenwasserstoffe, wie z. B. Trimethylbenzol, Isooctylthioglykolat, Thioglycerin, Dodecylmercaptan. Die Kettenübertragungsmittel werden bevorzugt in allen Stufen der Emulsionspolymerisation eingesetzt.

Das Kettenübertragungsmittel wird üblicherweise in einer Menge von 0,1 bis 5 Gew.-%, bezogen auf das Gesamtgewicht der eingesetzten Monomeren, eingesetzt.

Wenn als Kettenübertragungsmittel Isooctylthioglykolat eingesetzt wird, wird es bevorzugt in einer Menge von 0,25 bis 3 Teilen, bezogen auf 100 Teile Polymer, eingesetzt.

Die Polymere (1) und/oder (2) können auch mit Hilfe eines Zweistufenverfahrens hergestellt werden. In der ersten Stufe der Emulsionspolymerisation werden 5 bis 20 Gew.-% der Monomerenmischung aus a), b), c) und ggf. d) bei einer Temperatur von 70 - 90 °C polymerisiert. Bevorzugt nach erneuter Emulgatorenzugabe werden in der zweiten Stufe der Polymerisation die restlichen 80 bis 95 Gew.-% der Monomerenmischung in Gegenwart des in der ersten Stufe der Emulsionspolymerisation erhaltenen Polymerisats polymerisiert.

Besonders bevorzugt werden die Polymeren (1) und/oder (2) hergestellt durch Emulsionspolymerisation von Acrylsäure, Ethylacrylat und Methylmethacrylat.

Die erhaltenen Polymeren (1) und (2) werden durch Zugabe von Basen zumindest teilweise neutralisiert, und es werden ggf. übliche Hilfsstoffe und Additive zur Herstellung des wäßrigen Siegellackes zugegeben. Als Base werden Ammoniak und/oder Amine, vorteilhafterweise in Form einer wäßrigen Lösung des Neutralisationsmittels, eingesetzt. Insbesondere wird Ammoniak eingesetzt.

Bevorzugte Siegellacke werden erhalten, wenn eine Mischung aus

1.) 100 Gewichtsteilen mindestens eines weichen Polymers (1) und

2.) 30 bis 300, bevorzugt 50 bis 150, Gewichtsteilen mindestens eines harten Polymers (2)

eingesetzt wird.

Zur Herstellung des erfindungsgemäßen Siegellackes wird zunächst mindestens ein weiches Polymer (1) und davon getrennt mindestens ein hartes Polymer (2) hergestellt und anschließend miteinander gemischt. Die Mischung erfolgt dabei mit dem Fachmann wohlbekannten Methoden, beispielsweise durch intensives Rühren.

Dem Siegellack können ferner, falls erforderlich, noch geeignete Hilfsstoffe und Additive, die auf dem Gebiet der Siegelbeschichtung üblich sind, in üblichen Mengen, bevorzugt 0 bis 20 Gew.-%, bezogen auf das Gesamtgewicht des Siegellackes, zugesetzt werden. Dazu zählen Antiblock-Additive, Verlaufsmittel, Hydrophobierungsmittel und Additive, die das Gleitvermögen und die Entschäumung positiv beeinflussen. Die Heißgleiteigenschaften der überzogenen Kunststoffolien können durch Zugaben von festen, feinverteilten, wasserunlöslichen, anorganischen Materialien, z.B. kolloidales Siliciumdioxid, verbessert werden. Geeignete Antiblock-Additive sind feindispergierte Mineralstoffe sowie feinverteilte Wachse und wachsartige Materialien, die bei Temperaturen oberhalb der bei der Lagerung der Folien auftretenden maximalen Temperaturen schmelzen und die bei diesen Temperaturen in dem Acrylatcopolymerisat nicht löslich sind. Beispiele für natürliche Wachse sind Paraffinwachs, microkristallines Wachs, Bienenwachs, Carnaubawachs, Japanwachs und Montanwachs; Beispiele für synthetische Wachse sind hydriertes Rizinusöl, chlorierte Kohlenwasserstoffwachse und langkettige Fettsäureamide. Die zuvor genannten Wachse führen auch zu einer Verbesserung der Kaltgleit-Eigenschaften der überzogenen Kunststoffolien, worunter die Fähigkeit der Folien über Flächen bei Raumtemperatur zu gleiten, zu verstehen ist.

Ferner kann den Siegellacken zur Verbesserung der Siegelnahtfestigkeit ggf. noch ein Vernetzungsmittel, üblicherweise ein Melaminformaldehydharz, zugesetzt werden. Beispielsweise können den Siegellacken noch eines oder mehrere der im Handel unter dem Namen Cymel der Firma Cytec erhältlichen Formaldehydharze zugesetzt werden, z.B. Cymel 373, ein teilweise methyliertes Formaldehydharz mit einem Polymerisationsgrad von 2,3 und Cymel 385, ein teilweise methyliertes Formaldehydharz mit einem Polymerisationsgrad von 2,1.

Die erfindungsgemäßen Siegellacke können auf die unterschiedlichsten Substrate, insbesondere Kunststoffolien, aufgebracht werden. Als Kunststoffolien kommen bevorzugt Polyolefin-Folien, beispielsweise Polyethylen- und Polypropylen-Folien, coextrudierte Folien, Nylon und weiße opake Filme in Frage. Besonders bevorzugt handelt es sich dabei um Polypropylen, insbesondere orientiertes Polypropylen. Die Siegellacke können aber auch beispielsweise auf Cellophan, Papier, Polyester, HDPE (high density polyethylene) und LLDPE (linear low density polyethylene) aufgebracht werden.

Vor dem Aufbringen des wäßrigen Siegellackes auf die Kunststoffolien wird die Oberfläche der Folien im allgemeinen vorbehandelt, um sicherzustellen, daß der Überzug fest auf der Folie haftet. Dadurch soll vermieden werden, daß der Überzug von der Folie abblättert oder abgezogen wird.

Diese Behandlung wird gemäß bekannter Arbeitsweisen durchgeführt, z.B. durch Chlorierung der Kunststoffolie, Behandlung mit oxidierenden Mitteln, wie Chromsäure oder heißer Luft, durch Dampfbehandlung oder Flammenbehandlung. Besonders bevorzugt wird als Vorbehandlung eine Hochspannungscoronaentladung verwendet.

Die Kunststoffolien werden nach der Vorbehandlung im allgemeinen vorlackiert, um die Haftung des Überzugs auf der Substratfolie zu gewährleisten. Geeignete Vorbeschichtungsmittel bzw. Primer sind in der Literatur bekannt und umfassen z.B. Alkyltitanate und Polyethylenimine. Letztere sind zur Vorlackierung von Kunststoffolien besonders geeignet. Die Polyethylenimine können dabei sowohl aus organischer als auch aus wäßriger Lösung auf die ggf. vorbehandelten Kunststoffolien aufgetragen werden. Dabei kann die Konzentration des Polyethylenimins in der wäßrigen oder in der organischen Lösung beispielsweise 0,5 Gew.-% betragen. Geeignete Polyethylenimin-Primer sind beispielsweise beschrieben in DE-A-24 40 112 und US-A-3,753,769.

Die unbeschichteten Kunststoffolien haben im allgemeinen eine Dicke von 0,015 bis 0,060 mm. Der wäßrige Siegellack wird auf die Kunststoffolie in üblicher Weise, beispielsweise durch Gravurauftragung, Walzenauftragung, Eintauchen, Sprühen mit Hilfe des Tief- oder Flexodruckverfahren oder des Umkehrwalzenverfahrens (Reverse-Roll-Auftragsverfahren) aufgebracht. Die überschüssige wäßrige Lösung kann durch Abquetschwalzen oder Abstreichmesser entfernt werden. Die Siegellacke sollten üblicherweise in einer solchen Menge aufgebracht werden, daß beim Trocknen eine glatte, gleichmäßig verteilte Schicht mit einem Gewicht von 0,5 bis 5 g/m$^2$, bevorzugt von 1 bis 2 g/m$^2$, abgelagert wird.

Der durch den Siegellack gebildete Überzug auf der Kunststoffolie wird anschließend mit heißer Luft, Strahlungswärme oder durch irgendeinanderes übliches Mittel getrocknet. Die bei Verwendung von Kaltsiegellacken erforderliche Release-Coating-Schicht muß nicht aufgebracht werden.

Der auf der einen Außenseite der Kunststoffolie aufgebrachte erfindungsgemäße Siegellack stellt üblicherweise die Innenbeschichtung, d.h. die dem Verpackungsgut zugewandte Seite, der Kunststoffolie dar. Die gegenüberliegende Seite der Kunststoffolie ist üblicherweise mit einem Außenlack, der von dem Siegellack verschieden ist, beschichtet. Üblicherweise ist die Kunststoffolie mit einem bedruckbaren Außenlack auf Acrylatbasis beschichtet.

Diese bedruckbaren Außenlacke auf Acrylatbasis sind dem Fachmann wohl bekannt und beispielsweise in US-A-3,753,769 beschrieben. Sie enthalten üblicherweise ein Acrylatcopolymer mit einer Glasübergangstemperatur zwischen 40 und 70 °C.

Die erfindungsgemäßen Siegellacke zeichnen sich durch gute Anti-Blocking-Eigenschaften gegenüber diesen Außenlacken auf Acrylatbasis aus. Die mit dem Außenlack und dem erfindungsgemäßen Siegellack beschichteten Kunsststoffolien können entweder beim Folienhersteller oder später beim Hersteller der Verpackungsbehälter auf der Außenlackschicht noch mit einer Druckfarbe und einem Release Coat versehen werden.

Gemäß dem erfindungsgemäßen Verfahren zur Herstellung von Verpackungsbehältern liegt die Siegeltemperatur i.a. oberhalb von der Umgebungstemperatur. Sie beträgt i.a. 20 °C - 80 °C, bevorzugt mindestens 30 °C und besonders bevorzugt 40 °C - 70 °C. Die Siegelung erfolgt unter Anwendung von Temperatur und Druck. Während des Anpressens werden die Siegelbeschichtungen so in Kontakt gebracht, daß sie miteinander verfilzen. Es werden im allgemeinen Drucke im Bereich von 5 - 30 bar, vorzugsweise im Bereich von 6 - 8 bar, angewendet. Im allgemeinen reichen Siegelzeiten von einigen 1000stel Sekunden bis zu einigen 10tel Sekunden aus.

Das Trockengewicht der Siegelbeschichtung liegt bei der Folienbeschichtung i.a. im Bereich von 1 - 4 g/m$^2$.

Die nach dem erfindungsgemäßen Verfahren hergestellten gesiegelten Verpackungsbehälter weisen hervorragende Eigenschaften auf bezüglich der Haftung auf dem Untergrund und der Siegelnahtfestigkeit. Diese beträgt bevorzugt mindestens 250 g/2,54 cm. Die Siegelbeschichtungen entsprechen den geltenden lebensmittelrechtlichen Vorschriften und sind geruchsstabil. Die Beschichtungen blocken nicht gegen unbehandelte Kunststofffolien, wie z.B. gegen orientiertes Polypropylen. Trotz der sehr guten Antiblock-Eigenschaften liegt die Siegeltemperatur deutlich unter dem Siegeltemperaturbereich, wie er für Heißsiegellacke üblich ist. Im allgemeinen liegt die Siegeltemperatur etwa 30 °C niedriger, als mit heutigen Siegellacken üblich ist.

Nachfolgend wird die Erfindung anhand von Ausführungsbeispielen näher erläutert. Dabei bedeuten Teile Gewichtsteile, sofern nichts anderes angegeben wird.

### 1.1. Herstellung eines weichen Polymers (1.1)

In einem Reaktionsgefäß werden 23,937 Teile entmineralisiertes Wasser und 0,043 Teile eines Emulgators auf Basis von Phosphatestern von ethoxyliertem Nonylphenol (20% Festkörper) eingewogen. Es wird mit 0,075 Teilen entmineralisiertem Wasser gespült. Die Vorlage wird auf etwa 75 °C erwärmt. In den Monomerentank wird eine Mischung aus 18,819 Teilen Ethylacrylat (87 Gew.-%), 2,595 Teilen Methylmethacrylat (12 Gew.-%), 0,216 Teilen Acrylsäure (1 Gew.-%), 0,081 Teilen Isooctylthioglykolat und 0,077 Teilen entmineralisiertem Wasser eingewogen und vorgemischt. Dann werden 0,065 Teile Ammoniumperoxodisulfat und 0,252 Teile entmineralisiertes Wasser zugefügt und mit 0,200 Teilen entmineralisiertem Wasser gespült. 10 % des Inhalts des Monomerentanks werden während 30 min bei etwa 75 - 77°C gleichmäßig in den Reaktor dosiert. Anschließend werden 0,605 Teile des Emulgators zugefügt und mit 0,200 Teilen entmineralisiertem Wasser gespült.

Das Reaktionsgemisch wird etwa 10 min bei der Reaktionstemperatur gehalten, anschließend wird der Restinhalt des Monomerentanks während 3 Stunden bei etwa 75 - 77 °C gleichmäßig zudosiert. Nach Ende des Monomerenzulaufs wird der Monomerentank mit 2,000 Teilen entmineralisiertem Wasser gespült. Anschließend wird etwa 1 Stunde bei etwa 76 °C nachpolymerisiert. Anschließend werden 17,000 Teile entmineralisiertes Wasser zugegeben und bei einer Temperatur von etwa 60 - 65 °C wird innerhalb von 15 min unter Rühren eine Mischung aus 0,204 Teilen Ammoniak (25 %ig) und 2,042 Teilen Wasser zugegeben. Anschließend wird die Mischung 30 min bei 60 °C gehalten und danach werden 29,508 Teile entmineralisiertes Wasser zugegeben und mit 2,000 Teilen entmineralisiertem Wasser wird auf einen Festkörpergehalt von 22 % eingestellt.

Das erhaltene weiche Polymer 1.1 weist ein zahlenmittleres Molekulargewicht $M_n$ von 16.000 Dalton, eine Säurezahl von 11 mgKOH/g und eine Glasübergangstemperatur Tg1 von -6 °C (gemessen mit DSC = Differential Scanning Calorimetry) auf.

2.1. Herstellung eines harten Polymers (2.1)

Die Herstellung des harten Polymers (2.1) erfolgt analog zur Herstellung des weichen Polymers (1.1) mit den folgenden Unterschieden: In den Monomerentank wird eine Mischung aus 12,330 Teilen Ethylacrylat (57 Gew.-%), 8,220 Teilen Methylmethacrylat (38 Gew.-%), 1,082 Teilen Acrylsäure (5 Gew.-%), 0,162 Teilen Isooctylthioglykolat und 0,077 Teilen entmineralisiertem Wasser eingewogen. Ferner wird nach Ende des Monomerenzulaufs der Monomerentank mit 1,500 Teilen entmineralisiertem Wasser gespült. Anschließend wird etwa 15 min bei etwa 76 °C nachpolymerisiert. Danach wird innerhalb von 15 min unter Rühren eine Mischung aus 0,080 Teilen Ammoniak (25 %ig) und 1,516 Teilen Wasser zugegeben. Anschließend wird in eine auf 76 °C erwärmte Mischung aus 1,451 Teilen Ammoniak (25%ig) und 44,205 Teilen entmineralisiertem Wasser innerhalb von 30 bis 45 min abgelassen und mit 2,000 Teilen entmineralisiertem Wasser gespült. Dann wird noch 30 min die Temperatur bei 76 °C gehalten. Schließlich wird mit 2,000 Teilen entmineralisiertem Wasser auf einen Festkörpergehalt von 22 % eingestellt.

Das so erhaltene harte Polymer 2.1 weist ein zahlenmittleres Molekulargewicht $M_n$ von 12.000 Dalton, eine Säurezahl von 47 mgKOH/g und eine Glasübergangstemperatur Tg2 von +24 °C (gemessen mit DSC = Differential Scanning Calorimetry) auf.

1.2. Herstellung eines weichen Polymers (1.2) (Vergleichsbeispiel)

In einem Reaktionsgefäß werden 45,370 Teile entmineralisiertes Wasser und 0,022 Teile des handelsüblichen Emulgators Maranil A-75 der Firma Henkel eingewogen. Es wird mit 0,200 Teilen entmineralisiertem Wasser gespült. Die Vorlage wird auf etwa 80 °C erwärmt. In den Monomerentank wird eine Mischung aus 3,817 Teilen Acrylnitril (11 Gew.-%), 0,347 Teilen Acrylsäure (1 Gew.-%), 30,536 Teilen Ethylacrylat (88 Gew.-%) und 0,434 Teilen Isooctylthioglykolat eingewogen und vorgemischt. Dann wird eine Mischung aus 0,035 Teilen Ammoniumhydrogencarbonat, 0,052 Teilen Ammoniumperoxodisulfat, 0,056 Teilen Emulgator und 8,608 Teilen entmineralisiertem Wasser in den Peroxidtank eingewogen und vorgemischt. Danach wird eine Mischung aus 0,052 Teilen Ammoniumperoxodisulfat und 0,468 Teilen entmineralisiertem Wasser in den Reaktor zugefügt und mit 0,200 Teilen entmineralisiertem Wasser gespült. Das Reaktionsgemisch wird etwa 5 min bei der Reaktionstemperatur gehalten, anschließend wird der Inhalt des Monomerentanks während 2,5 Stunden bei etwa 80 °C gleichmäßig zudosiert. Der Inhalt des Peroxidtanks wird gleichzeitig mit dem Inhalt des Monomerentanks während 2,75 Stunden bei etwa 80 °C gleichmäßig zudosiert, wobei mit dem Zudosieren des Inhalts des Peroxidtanks 15 min nach Zugabe des Inhalts des Monomerentanks begonnen wird. Nach Ende des Monomerenzulaufs wird der Monomerentank mit 3,904 Teilen entmineralisiertem Wasser gespült. Nach Ende des Zulaufs des Inhalts des Peroxidtanks wird der Peroxidtank mit 0,400 Teilen entmineralisiertem Wasser gespült. Anschließend wird etwa 30 min bei etwa 80 °C nachpolymerisiert. Anschließend wird bei einer Temperatur von etwa 70 - 80 °C innerhalb von 15 min unter Rühren eine Mischung aus 1,354 Teilen Ammoniak (25 %ig) und 4,145 Teilen Wasser zugegeben. Anschließend wird die Mischung 1 Stunde bei 80 °C gehalten und danach wird langsam auf 50 °C abgekühlt.

Das erhaltene weiche Polymer 1.2 weist ein zahlenmittleres Molekulargewicht $M_n$ von 14.000 Dalton, eine Säurezahl von 15 mgKOH/g und eine Glasübergangstemperatur Tg1 von -5 °C (gemessen mit DSC = Differential Scanning Calorimetry) auf.

2.2. Herstellung eines harten Polymers (2.2) (Vergleichsbeispiel)

In einem Reaktionsgefäß werden 25,730 Teile entmineralisiertes Wasser und 0,012 Teile des handelsüblichen Emulgators Maranil A-75 der Firma Henkel eingewogen. Es wird mit 0,200 Teilen entmineralisiertem Wasser gespült. Die Vorlage wird auf etwa 80 °C erwärmt. In den Monomerentank wird eine Mischung aus 4,471 Teilen Acrylnitril (22,5 Gew.-%), 0,994 Teilen Acrylsäure (5 Gew.-%), 14,406 Teilen Ethylacrylat (72,5 Gew.-%) und 0,248 Teilen Isooctylthioglykolat eingewogen und vorgemischt. Dann wird eine Mischung aus 0,030 Teilen Ammoniumperoxodisulfat, 0,032 Teilen Emulgator und 8,076 Teilen entmineralisiertem Wasser in den Peroxidtank eingewogen und vorgemischt. Danach wird eine Mischung aus 0,030 Teilen Ammoniumperoxodisulfat und 0,349 Teilen entmineralisiertem Wasser in den Reaktor zugefügt und mit 0,200 Teilen entmineralisiertem Wasser gespült. Das Reaktionsgemisch wird etwa 5 min bei der Reaktionstemperatur gehalten, anschließend wird der Inhalt des Monomerentanks während 2,5 Stunden bei etwa 80 °C gleichmäßig zudosiert. Der Inhalt des Peroxidtanks wird gleichzeitig mit dem Inhalt des Monomerentanks während 2,75 Stunden bei etwa 80 °C gleichmäßig zudosiert, wobei mit dem Zudosieren des Inhalts des Peroxidtanks 15 min nach Zugabe des Inhalts des Monomerentanks begonnen wird. Nach Ende des Monomerenzulaufs wird der Monomerentank mit 3,443 Teilen entmineralisiertem Wasser gespült. Nach Ende des Zulaufs des Inhalts des Peroxidtanks wird der Peroxidtank mit 0,400 Teilen entmineralisiertem Wasser gespült. Anschließend wird etwa 30 min bei etwa 80 °C nachpolymerisiert. Anschließend werden bei einer Temperatur von etwa 70 - 80 °C innerhalb von 30 min unter Rühren 33,000 Teile entmineralisiertes Wasser, das auf 80 °C erwärmt wurde, zugegeben. Danach wird innerhalb von 15 min bei einer Temperatur von 70 bis 80 °C eine Mischung aus 1,609 Teilen Ammoniak (25 %ig) und 6,770 Teilen Wasser zugegeben. Anschließend wird die Mischung 1 Stunde bei 80 °C gehalten und danach wird langsam auf 50 °C abgekühlt.

Das erhaltene harte Polymer 2.2 weist ein zahlenmittleres Molekulargewicht $M_n$ von 17.000 Dalton, eine Säurezahl von 54 mgKOH/g und eine Glasübergangstemperatur Tg2 von 21 °C (gemessen mit DSC = Differential Scanning Calorimetry) auf.

3. Herstellung der wäßrigen Siegellacke 1 und 2

Unter Verwendung der Polymere 1.1, 1.2, 2.1 und 2.2 werden aus den in Tabelle 1 angegebenen Komponenten die wäßrigen Siegellacke 1 (Beispiel 1) und 2 (Vergleichsbeispiel 1) hergestellt.

Tabelle 1

| Zusammensetzung der Siegellacke 1 und 2 in Teilen | | |
|---|---|---|
| | Beispiel 1 | Vergleichsbeispiel 1 |
| Polymer 1.1 | 50 | - |
| Polymer 2.1 | 50 | - |
| Polymer 1.2 | - | 50 |
| Polymer 2.2 | - | 50 |
| Syloid 63 FP | 4 | 4 |

4. Applikation der wäßrigen Siegellacke 1 und 2

Die Siegellacke 1 bzw. 2 werden mit einer Drahtrakel auf Polyethylenimin geprimertes orientiertes Polypropylen 33MW247 der Firma Mobil Plastics, Belgien, appliziert. Das Auftragsgewicht beträgt $1,5 \pm 0,2$ g/m$^2$. Getrocknet wurde 15 s bei 95 °C max. Oberflächentemperatur in einem Helios-Laborofen.

Von diesen lackierten Filmen des Beispiels 1 und des Vergleichsbeispiels 1 wird die Blockbeständigkeit gegen die lackierte Rückseite des Filmes bestimmt. Ferner werden Siegelverhalten und Klebrigkeit bestimmt. Die Meßergebnisse sind in Tabelle 2 dargestellt.

Blockbeständigkeit

Die Blockbeständigkeit wird auf 2 Weisen getestet:

1.) 24 Stunden bei 47 °C, 0,5 kg/cm$^2$
Testlack gegen Außenseite, die mit einem nichtbedruckbaren Außenlack 1 auf Basis eines Acrylatcopolymers beschichtet ist.
2.) 24 Stunden bei 47 °C, 0,5 kg/cm$^2$
Testlack gegen Außenseite, die mit einem bedruckbaren Außenlack 2 auf Basis eines Acrylatcopolymers beschichtet ist.

Danach wird bei Zimmertemperatur die Trennstärke der zwei Filme mit dem Gerät "Testometric 100D" der Firma H. Messmer, London, bei einer Geschwindigkeit von 100 mm/min und einer Meßbreite von 25 mm gemessen. Die Meßergebnisse sind in Tabelle 2 dargestellt.

Minimum-Siegeltemperatur (QT MST)

Der mit dem Testlack beschichtete Film wird rund mit einer Blattfeder (40g/cm) gespannt. Anschließend wird der Film versiegelt bei 5 bar/2s und danach sofort die Blattfeder entspannt. Die Minimum-Siegeltemperatur ist dabei die Temperatur, bei der die Siegelnaht noch dicht bleibt.

Klebrigkeit bei niedrigem Druck (LPST)

Die Klebrigkeit bei niedrigem Druck wird geprüft durch 2 mit dem Siegellack beschichtete Filme, die gegeneinander 4 h bei Zimmertemperatur bei einem Druck von 0,05kg/cm$^2$ verpreßt werden. Anschließend wird die Trennstärke mit dem Gerät "Testometric 100D" der Firma H. Messmer, London, bei einer Geschwindigkeit von 100 mm/min und einer Meßbreite von 25 mm gemessen.

Tabelle 2

| Prüfergebnisse | | |
|---|---|---|
| | Beispiel 1 | Vergleichsbeispiel 1 |
| Blockbeständigkeit gegen Außenlack 1 (g/25mm) | 100 | 60 |
| Blockbeständigkeit gegen Außenlack 2 (g/25mm) | 110 | 80 |
| QT MST (°C) | 60 | 50 |
| LPST (g/25mm) | 10 | 4 |

**Patentansprüche**

1.  Siegellack auf der Basis einer wäßrigen Acrylatcopolymerisat-Dispersion und/oder -Lösung, welche herstellbar ist durch Polymerisation von Alkylestern der Acrylsäure und der Methacrylsäure und von $\alpha,\beta$-ethylenisch ungesättigten Carbonsäuren, dadurch gekennzeichnet, daß der Siegellack eine Mischung aus

    1.) einem weichen Polymer (1) mit einer Glasübergangstemperatur Tg1 unterhalb von Raumtemperatur und

    2.) einem harten Polymer (2) mit einer Glasübergangstemperatur Tg2, die höher ist als die Glasübergangstemperatur Tg1 des Polymers (1)

    enthält, wobei sowohl das weiche Polymer (1) als auch das harte Polymer (2) weniger als 5 Gew.-%, bezogen auf das Gesamtgewicht an eingesetzten Monomeren, nitrilgruppenhaltige Monomere einpolymerisiert enthalten.

2.  Siegellack nach Anspruch 1, dadurch gekennzeichnet, daß das weiche Polymer (1) eine Glasübergangstemperatur Tg1 von -25 bis +10 °C und das harte Polymer (2) eine Glasübergangstemperatur Tg2 von mehr als 10 bis 60 °C aufweist.

3.  Siegellack nach Anspruch 1, dadurch gekennzeichnet, daß das weiche Polymer (1) eine Glasübergangstemperatur Tg1 von -15 bis +5 °C und das harte Polymer (2) eine Glasübergangstemperatur Tg2 von 15 bis 35 °C aufweist.

4.  Siegellack nach einem der Ansprüche 1 bis 3, dadurch gekennzeichnet, daß der Siegellack eine Mischung aus

    1.) 100 Gewichtsteilen mindestens eines weichen Polymers (1) und

    2.) 30 bis 300, bevorzugt 50 bis 150, Gewichtsteilen mindestens eines harten Polymers (2)

    enthält.

5.  Siegellack nach einem der Ansprüche 1 bis 4, dadurch gekennzeichnet, daß das weiche Polymer (1) bzw. die weichen Polymere (1) im wesentlichen als wäßrige Dispersion und das harte Polymer (2) bzw. die harten Polymere (2) zumindest teilweise, bevorzugt im wesentlichen als Lösung vorliegen.

**6.** Siegellack nach einem der Ansprüche 1 bis 5, dadurch gekennzeichnet, daß das weiche Polymer (1) bzw. die weichen Polymere (1) erhältlich sind unter Verwendung von

a) 0,1 bis 10 Gew.-%, bevorzugt 0,5 bis 5 Gew.-%, $\alpha,\beta$-ethylenisch ungesättigten Monomeren mit Carbonsäure- und/oder Sulfonsäuregruppen,

b) 75 bis 95 Gew.-%, bevorzugt 85 bis 90 Gew.-%, Alkylestern der Acrylsäure mit 1 - 12 Kohlenstoffatomen im Alkylrest,

c) 5 bis 20 Gew.-%, bevorzugt 9 bis 14 Gew.-%, Alkylestern der Methacrylsäure mit 1 - 12 Kohlenstoffatomen im Alkylrest und

d) ggf. bis zu 25 Gew.-%, bevorzugt bis zu 10 Gew.-%, weiterer Monomerer,

wobei die Summe von a), b), c) und d) jeweils 100 Gew.-% beträgt und die Mengen von a), b), c) und d) so gewählt werden, daß das Polymer (1) den gewünschten Tg1-Wert aufweist.

**7.** Siegellack nach einem der Ansprüche 1 bis 6, dadurch gekennzeichnet, daß das harte Polymer (2) bzw. die harten Polymere (2) erhältlich sind unter Verwendung von

a) 1 bis 10 Gew.-%, bevorzugt 4 bis 8 Gew.-%, $\alpha,\beta$-ethylenisch ungesättigten Monomeren mit Carbonsäure- und/oder Sulfonsäuregruppen,

b) 35 bis 84 Gew.-%, bevorzugt 45 bis 76 Gew.-%, Alkylestern der Acrylsäure mit 1 - 12 Kohlenstoffatomen im Alkylrest,

c) 15 bis 60 Gew.-%, bevorzugt 20 bis 45 Gew.-%, Alkylestern der Methacrylsäure mit 1 - 12 Kohlenstoffatomen im Alkylrest und

d) ggf. bis zu 25 Gew.-%, bevorzugt bis zu 10 Gew.-%, weiterer Monomerer,

wobei die Summe von a), b), c) und d) jeweils 100 Gew.-% beträgt und die Mengen von a), b), c) und d) so gewählt werden, daß das Polymer (2) den gewünschten Tg2-Wert aufweist.

**8.** Siegellack nach einem der Ansprüche 1 bis 7, dadurch gekennzeichnet, daß das weiche Polymer (1) und/oder das harte Polymer (2) herstellbar sind durch Emulsionspolymerisation, wobei in der ersten Stufe der Emulsionspolymerisation 5 bis 20 Gew.-% der Monomerenmischung aus a), b), c) und ggf. d) bei einer Temperatur von 70 °C - 90 °C unter Verwendung von Emulgatoren, Polymerisationsinitiatoren und Kettenübertragungsmitteln polymerisiert werden, bevorzugt nach erneuter Emulgatorenzugabe in der zweiten Stufe der Emulsionspolymerisation die restlichen 80 bis 95 Gew.-% der Monomerenmischung in Gegenwart des in der ersten Stufe der Emulsionspolymerisation erhaltenen Polymerisats bei einer Temperatur von 70 °C - 90 °C polymerisiert werden, das erhaltene Reaktionsgemisch durch Zugabe von Basen Zumindest teilweise neutralisiert wird und ggf. übliche Hilfsstoffe und Additive zugefügt werden.

**9.** Siegellack nach einem der Ansprüche 1 bis 8, dadurch gekennzeichnet, daß das weiche Polymer (1) und/oder das harte Polymer (2) herstellbar ist durch Emulsionspolymerisation von Acrylsäure, Ethylacrylat und Methylmethacrylat.

**10.** Verfahren zur Herstellung des Siegellacks nach einem der Ansprüche 1 bis 9, dadurch gekennzeichnet, daß

1.) mindestens ein weiches Polymer (1) hergestellt wird,
2.) mindestens ein hartes Polymer (2) hergestellt wird und
3.) das oder die weichen Polymere (1) und das oder die harten Polymere (2) miteinander gemischt werden.

**11.** Kunststoffolie für die Herstellung von Verpackungsbehältern, bei der eine Außenseite der Folie mit einem Siegellack und die gegenüberliegende Außenseite mit einem Außenlack beschichtet ist, dadurch gekennzeichnet, daß die Folie mit einem Siegellack nach einem der Ansprüche 1 bis 9 beschichtet ist.

**12.** Kunststoffolie nach Anspruch 11, dadurch gekennzeichnet, daß die Folie an der gegenüberliegenden Außenseite mit einem bedruckbaren Außenlack auf Acrylatbasis beschichtet ist.

**13.** Kunststoffolie nach Anspruch 11 oder 12, dadurch gekennzeichnet, daß über dem Außenlack eine Druckfarbe und über der Druckfarbe ein Release-Coat angeordnet ist.

**14.** Verfahren zur Herstellung von gesiegelten Verpackungsbehältern aus Kunststoffolien, bei dem ein Siegellack auf die Kunststoffolie aufgebracht und getrocknet wird, dadurch gekennzeichnet, daß ein Siegellack nach einem der Ansprüche 1 bis 9 aufgebracht wird.

**15.** Verfahren nach Anspruch 14, dadurch gekennzeichnet, daß die Kunststoffolie vor dem Aufbringen des Siegellackes mit einem Primer beschichtet wird.

**16.** Verfahren nach Anspruch 14 oder 15, dadurch gekennzeichnet, daß bei einer Siegeltemperatur von 20 bis 80 °C, bevorzugt mindestens 30°C und besonders bevorzugt 40 bis 70 °C gesiegelt wird.

**17.** Verpackungsbehälter aus Kunststoffolie, hergestellt nach einem Verfahren nach einem der Ansprüche 14 bis 16.

**18.** Verwendung des Siegellackes nach einem der Ansprüche 1 bis 9 zur Beschichtung von Kunststoffolien.